# EUROPEAN PATENT SPECIFICATION

(11) **EP 1 583 323 B1**
(45) Date of publication and mention of the grant of the patent: **07.06.2006**
(21) Application number: 05251499.9
(22) Date of filing: 11.03.2005
(51) Int. Cl.: H04L 29/06

(54) **Communications apparatus, name resolution method and program**
Kommunikationsvorrichtung, Verfahren und Programm zur Namenauflösung
Appareil de communication, procédé et programme de résolution de noms

(30) Priority: 31.03.2004 JP 2004107599
(43) Date of publication of application: 05.10.2005
(73) Proprietor: KABUSHIKI KAISHA TOSHIBA, Tokyo 105-8001 (JP)
(72) Inventor: Ishiyama, Masahiro, Toshiba Corporation, Minato-ku, Tokyo 105-8001 (JP); Jimmei, Tatsuya, Toshiba Corporation, Minato-ku, Tokyo 105-8001 (JP)
(74) Representative: Richardson, Mark Jonathan

(56) References cited:
- GOPINATH RAO NRG S ET AL: "IPv6 Hostname auto-registration Procedure <draft-gopinath-ipv6-hostna me-auto-reg-02.txt>" IETF STANDARD-WORKING-DRAFT, INTERNET ENGINEERING TASK FORCE, IETF, CH, no. 2, 3 December 2002 (2002-12-03), XP015001025 ISSN: 0000-0004
- JUN-ICHIRO ITOJUN HAGINO IIJ RESEARCH LABORATORY: "Name resolution in zeroconf environment using ICMPv6 node information query draft-itojun-ipv6-nodeinfo-zeroconflookup- 00.txt" IETF STANDARD-WORKING-DRAFT, INTERNET ENGINEERING TASK FORCE, IETF, CH, 20 June 2002 (2002-06-20), XP015003751 ISSN: 0000-0004
- MATT CRAWFORD FERMILAB: "IPv6 Node Information Queries <draft-ietf-ipngwg-icmp-name-lookups-10.tx " IETF STANDARD-WORKING-DRAFT, INTERNET ENGINEERING TASK FORCE, IETF, CH, vol. ipngwg, no. 10, 26 June 2003 (2003-06-26), XP015002102 ISSN: 0000-0004
- LEVON ESIBOV BERNARD ABOBA DAVE THALER MICROSOFT: "Linklocal Multicast Name Resolution (LLMNR)" IETF STANDARD-WORKING-DRAFT, INTERNET ENGINEERING TASK FORCE, IETF, CH, vol. dnsext, no. 22, 23 July 2003 (2003-07-23), XP015001787 ISSN: 0000-0004
- THOMSON S ET AL: "Request for comments 2462 IPv6 stateless autoconfiguration" NETWORK WORKING GROUP REQUEST FOR COMMENTS, no. 2462, December 1998 (1998-12), pages 1-21, XP002974156

## Description

The present invention is relates to a name resolution method of IPv6 and a communication apparatus using the name resolution method.

In resent years, the world's largest computer network, the Internet, has become widely used, and a new computer business has developed by connecting the Internet to use disclosed information and services and, by providing information and services to users through external access via the Internet. New technology regarding the use of the Internet has development and expanded.

On the Internet, each computer has an identifier called an Internet Protocol (IP) address and exchanges packets, based on the IP address. However, the IP address is numeric and lacks the intuitiveness and simplicity to be used by a person without modification. Therefore, a mechanism of conversion between an IPv6 address and a character string, i.e., a "name", which is easier to deal with by a person, is used. A conversion system with the highest use on the Internet is the domain name system (DNS). Since DNS is used for global name resolution on the Internet, a name used in DNS, i.e., a fully qualified domain name (FQDN) should be unique on the Internet.

On the other hand, it becomes unnecessary for all node apparatuses (terminals) to have globally unique names, respectively, accompanying the spread of the Internet. In DNS, regarding disclosure of a name, it is impossible from the nature of DNS for a name of a certain node to be disclosed only for specific members. Therefore, it is possible to find with brute force the name of a certain domain and it becomes possible for a third person having malice to easily acquire information about names of existing nodes. This fact involves the problem of a leakage of information. Moreover, though a DNS server for managing the FQDN is required to use the FQDN, a problem may occur on the setting place, management, registration and operation of the DNS server.

For a small network used in a house, etc., there are several technologies to locally define a name for the network and access a node thereby. However, these technologies are on the premises that communication partners specified by names are located near one another on the network, and it is impossible for the technologies to be used directly when the network is intended to be accessed by using the names outside the network. In this case, it becomes inconvenient for users, because a dedicated server for resolution from outside and a protocol for finding the dedicated server are required.

To avoid these problems, a method, e.g., of defining a name effective only in a certain network/management domain is conceivable. In this case, it is conceivable for each node to perform autonomous name resolution by using the network without using the DNS, etc. For example, in IPv6, the name (FQDN or address) of the node in communication by using Internet control message protocol v6 (ICMPv6) can be known by using node information (NI) query. (For example, refer to draft-ieft-ipngwg-icmp-name-lookups-10, June 26, 2003, IPng Working Group Internet Draft, [retrieved on March 10, 2004], the Internet URL:http://www.waterspriongs.org/pub/id/draft-ieft-ipngwg-iemp-name-lookups-10.txt)

In the case of using such a method, a technique of collecting names of nodes on a network and making a response to an address is considerable. However, if such a method is adopted, there is a fear of acquiring a link local address as an address corresponding to the name of the node in IPv6.

The link local address is an address specific to IPv6 and a terminal having the address is useful only in an area (link local) capable of directly communicating without a router. A scopeid (for example, the number indicating any one of the interfaces on the Internet and a wireless LAN) indicating an interface to transfer packets is required in addition to an address in order to treat the address as perfect information. However, since the meanings of the values of the scopeid are different depending on each node, perfect information about the link local address is hardly provided to other nodes.

For example, draft-gopinath-ipv6-hostname-auto-reg-02, December 03, 2002, IETF Internet Draft from S. Gopinath Rao and K. Ettikan, discloses a method for collecting, in a DNS server, relations between local names and IPv6 addresses of nodes on local links. However, performing a name resolution on this server does not necessarily provide a global IPv6 address.

As mentioned above, in a conventional name resolution method has a problem that it is hard for IPv6 node to acquire a global address of the other IPv6 node.

Therefore, in consideration of the problems above described, it is an object of the present invention to provide a name resolution method capable of easily acquiring a global address of each IPv6 node in a link local of IPv6, a communication apparatus using the method and a program.

According to a first aspect of the present invention, a communication apparatus having a first address which is a link local address of IPv6 and is used for communicating with a node apparatus and a second address which is a global address acquires an IPv6 address corresponding to the node apparatus; determines whether the IPv6 address acquired is a link local address or a global address, based on a prefix included in the IPv6 address acquired; generates an address candidate of the node apparatus by combining an interface ID included in IPv6 address acquired with a prefix of the second address, when the IPv6 address acquired is determined to be the link local address; generates a Node Information query (NI-query) message of Internet Control Message Protocol v6 (ICMPv6) including the address candidate as a destination address; transmits the NI-query message; receives a Node Information reply (NI-reply) message of ICMPv6; and determines that the address candidate is the global address of the node apparatus when NI-reply message received includes the address candidate as a sender address.

According to a second aspect of the present invention, a communication apparatus having at least a first address which is a link local address of IPv6 and is used for communicating with a node apparatus acquires an IPv6 address of the node apparatus; determines whether the IPv6 address acquired is a link local address or a global address, based on a prefix included in the IPv6 address acquired; generates a Node Information query (NI-query) message of Internet Control Message Protocol v6 (ICMPv6) when the IPv6 address acquired is determined to be the link local address, the NI-query message being used for acquiring the global address of the node apparatus and including the link local address of the node apparatus as a destination address; transmits the NI-query message; receives a Node Information reply (NI-reply) message of ICMPv6 including the link local address of the node apparatus as the sender address and the global address of the node apparatus, to obtain the global address of the node apparatus.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an example of a configuration of a main portion of the communication apparatus regarding an embodiment of the present invention;
FIG. 2 is a block diagram showing an example of a configuration of a whole of a communication system to explain a name resolution method regarding the embodiment;
FIG. 3 illustrates an example of storage of name and address of a terminal B and a terminal C acquired at a terminal A;
FIG. 4 is a flowchart for explaining an processing operation of the terminal A regarding a first name resolution method; and
FIG. 5 is a flowchart for explaining a processing operation of the terminal A regarding a second name resolution method.

Hereinafter, the embodiment of the present invention will be explained by referring to the drawings.

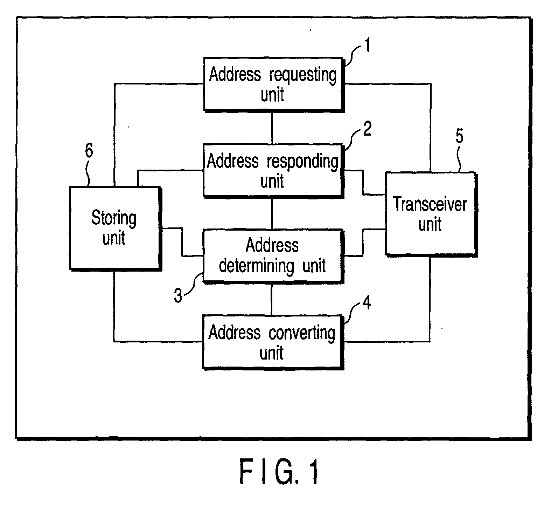

FIG. 1 illustrates the example of the configuration of the main portion of an IPv6 node (communication apparatus) using the name resolution method of the present invention, the main portion includes an address requesting unit 1, an address responding unit 2, an address determining unit 3, an address converting unit 4, a transceiver unit 5 and a storing unit 6. Here, the IPv6 node is a communication apparatus to communicate by using IPv6.

The address requesting unit 1 generates a request message (NI-query) of ICMPv6 to inquire (require) a name (e.g., a host name, a domain name and an FQDN) or an address to the other IPv6 node in the same network.

The address responding unit 2 generates a response message (NI-reply) of IMCPv6 to the NI-query transmitted from the other IPv6 node.

The address determining unit 3 checks whether the global address of the other IPv6 node is acquired or a link local address thereof is acquired by the NI-reply transmitted from the other IPv6 node. If the global address is acquired, the global address is stored into the storing unit 6 together the name of the other IPv6 node. In contrast, if the link local address is acquired, the address converting unit 4 is activated to acquire the global address of the other IPv6 node.

The address converting unit 4 performs a process to acquire the global address of the other IPv6 node, based on the link local address of the other IPv6 node.

The storing unit 6 stores name (host name, domain name, FQDN) and IPv6 address (prefix of a local address, prefix of a global address, scopeid and interface ID) of IPv6 node which having the storing unit 6 and names (host name/FQDN) and IPv6 address (prefix of a local address, prefix of a global address, scopeid and interface ID) of the other IPv6 nodes.

The transceiver unit 5 transmits a message of the NI-query generated by the address requesting unit 1 or the address converting unit 4, receives the message of the NI-reply transmitted from the other IPv6 node, and transfers the message received to each component unit 1-4, respectively.

According to the configuration shown FIG. 1, the global address of the other IPv6 node can be acquired, based on the link local address of the other IPv6 node acquired by the NI-query, by adding the address determining unit 3 and the address converting unit 4 to the IPv6 node.

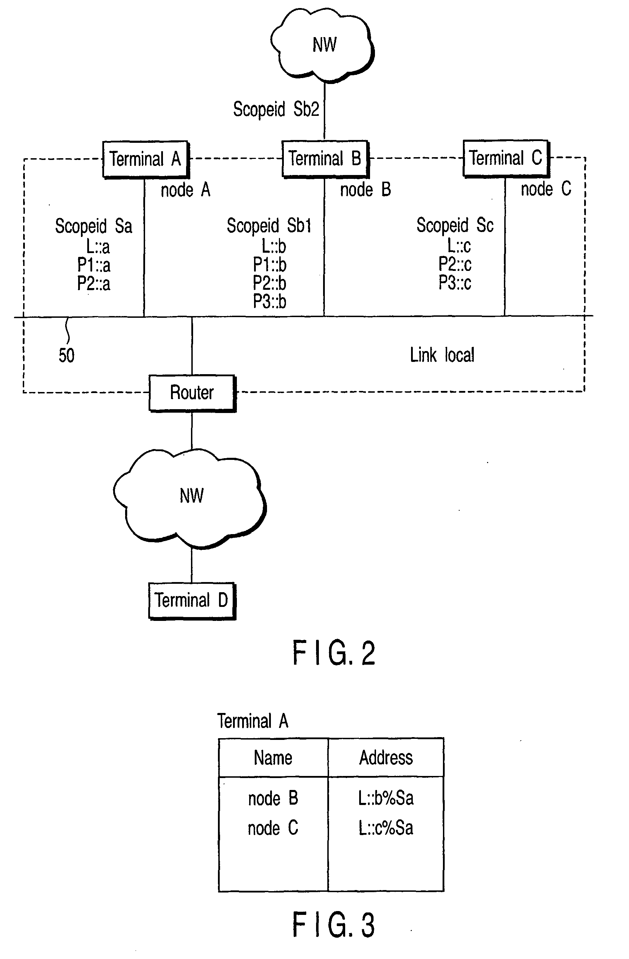

Next, the processing operation of IPv6 node including the configuration shown in FIG. 1 will be explained by referring to FIG. 2.

In FIG. 2, it is assumed that terminals A, B and C being IPv6 nodes are connected to a local network (LAN) 50 which communicates in a protocol of a data link layer such as an Ethernet TM and can communicate with one another. At least the terminals A, B and C are assumed that they exist in the same link local.

The terminal D being the IPv6 node is connected to a network different from the LAN 50 with the terminals A, B and C connected thereto. That is, the terminal D exists in a link local different from the link local in which the terminals A, B and C exist therein. The terminal D is assumed to be communicable to any one of the terminals A, B and C via a router.

FQDNs of the terminals A, B, C and D are assumed that "node A", "node B", "node C" and "node D", respectively.

Prefixes of the link local address and the global addresses used on the link local are assumed that "L", "P1", "P2" and "P3", respectively.

The terminal A has a scopeid "Sa" and an interface ID "a", the terminal B has a scopeid "Sb1" and an interface ID "b", and the terminal C has a scopeid "Sc" and an interface ID "c". The terminal B is assumed to have a scopeid "Sb2" to communicate via an interface different from one for the LAN 50.

The terminal C is assumed that it has not used the prefix "P1" of the global address for some reason. The terminal A is similarly assumed that it has not used the prefix "P3" for some reason.

Accordingly, the terminal A uses a link local address "L::a", global addresses "P1::a" and "P2::a", the terminal B uses a link local address "L::b", global addresses "P1::b", "P2::b" and "P3::b", and the terminal C uses a link local address "L::c", global addresses "P2::c" and "P3::c".

When the terminal A intends to acquire the names of each terminal from each terminal on the same network (link local), the NI-query is multi-cast in the link local. If a source address (sender address src) of the NI-query is a link local address, each terminal replies NI-replies having a local link address of the each terminal as a source address, respectively.

In this case, information which can be acquired by the terminal A is each of the names and each of the link local addresses of the terminals B, C as shown in FIG. 3.

This acquired link local address has a meaning only at the terminal A. For example, if the terminal D wants to communicate with the terminal C, the terminal D should know the address of the terminal C, however, if the name "node C" is not global one (e.g., in the case that the name "node C" has not been registered in the DNS), a name resolution is required locally. On the other hand, since the terminal D exists in the link local different from that in which the terminals A-C exist, it is impossible to use the name resolution method in the same link local in which the terminal D exist. Therefore, for example, a method for the terminal D to ask an address of the terminal C to a terminal (e.g., the terminal A) in the link local in which the terminal C exists is conceivable.

However, in this example, since the address which is known by the terminal A is the link local address of the terminal C, it is no use for the terminal D existing in a link local different from that in which the terminals A-C exist to know the link local address of the terminal C.

For example, if the terminal B has not a name resolution mechanism used in such a link local, or the terminal A stores the name used in the link local, the terminal B can inquire an address of the "node C" to the terminal A. Even in this case, there is a problem because scopeids of the terminals A and B are different. That is, the scopeid "Sa" of the terminals A has no meaning for the terminal B, and it can not be known whether the terminal C exists on an interface side corresponding to the scopeid "Sb1" or in an interface side corresponding to the scopeid "Sb2" only from the address information.

Therefore, in this embodiment, if the terminal A acquires a link local address, the terminal A converts it into a global address.

Here, at least the terminal A includes a configuration shown in FIG. 1. The other terminals may have not the address determining unit 3 and the address converting unit 4 among the components units 1-6 shown FIG. 1.

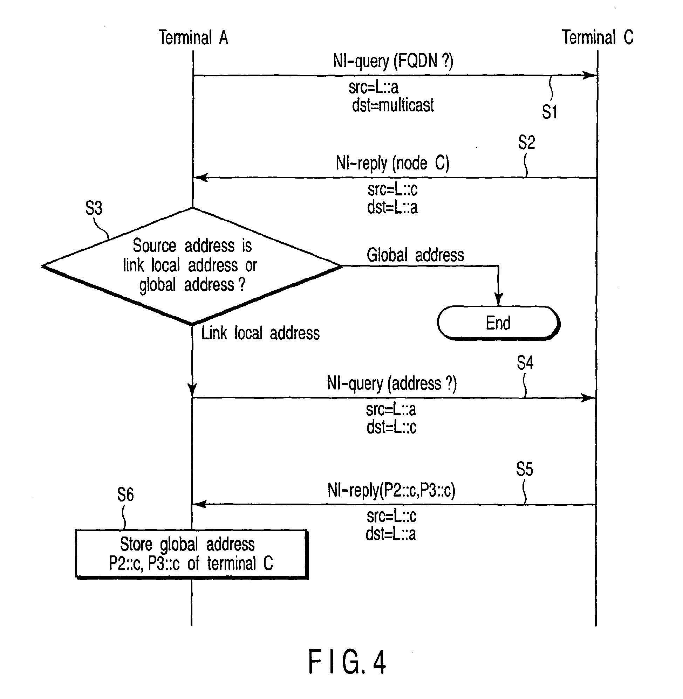

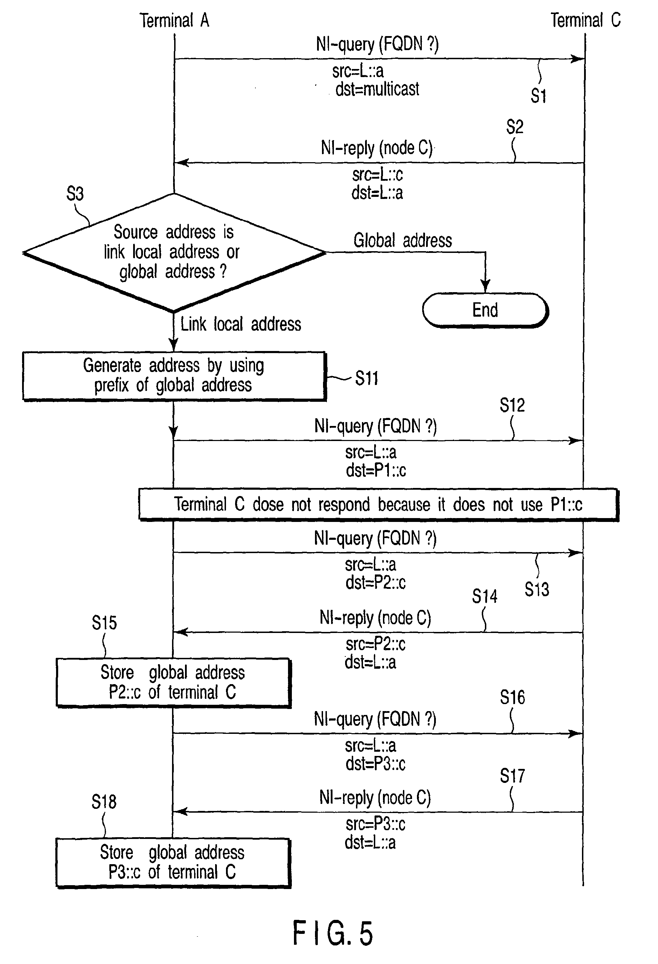

Next, name resolution processing operations at the terminal A will be explained by referring to FIG. 4 and FIG. 5. The name resolution method regarding this embodiment is configured in that if a link local address is acquired, it is converted into a global address (acquire a global address).

At first, a processing operation of the terminal A using a first name resolution method (a first method) will be explained by referring to FIG. 4. In the first method, if a link local address of a certain terminal is acquired, an NI-query (defined by the ICMP) to inquire an address from the certain terminal is used. Operations of the terminal A for inquiring each name of each terminal from each of the terminal in the same link local will be firstly explained.

The address requesting unit 1 of the terminal A generates NI-query to inquire the names of each terminal in the same link local. In an area called "Q type" of the generated NI-query, a "FQDN" designating that it is a query requesting a name is described, its source address (src) is a link local address "L::a" of the terminal A and a destination (dst) is "multicast". The NI-query generated by the address requesting unit 1 is multi-cast from the transceiver unit 5 into a link local (step S1).

If the transceiver units 5 of the terminals B and C existing in the link local same as that in which the terminal A exists receive NI-queries, the address responding units 2 generate NI-replies (defined by the ICMP) to inform each name. For example, the name of the terminal C (requested by the NI-query) is described into an area called "Data" of the NI-reply generated from the address responding unit 2 of the terminal C, the source address (src) is a link local address "L::c" and a destination (dst) is "L::a". The NI-replies generated from the address responding units 2 of the terminals B and C are transmitted to the terminal A from the transceivers 5 (step S2).

Mentioned above is the same method of a conventional name resolution method of IMCPv6.

Hereinafter, only about between the terminal C and A will be explained, but same goes for about between the terminal B and A.

When the transceiver unit 5 of the terminal A receives the NI-reply transmitted from the terminal C, the address determining unit 3 checks the area with the source address of the NI-reply described therein and determines whether the address in the area is a link local address or a global address (step S3). For example, if a prefix of the source address is "L", the address determining unit 3 determines that the address is the link local address, and if it is any one of "P1", "P2" and "P3", determines that it is the global address.

If the source address is the global address, the address determining unit 3 stores the name included in the NI-reply from the terminal C and the global address corresponding to the name into the storing unit 6 and completes the operation. On the other hand, if the source address is the link local address, the address determining unit 3 activates the address converting unit 4.

The address converting unit 4 recognizes that the terminal C has the local address called "L::c" though the steps S1-S2, so that it generates an NI-query to inquire the global address of the terminal C. An "address" which is information designating that the Ni-query is the query to request an address is described into an area called "Q type" of the generated NI-query, a source address (src) is the link local address "L::a" of the terminal A and a destination (dst) is the link local address "L::c" of the terminal C. The NI-query generated by the address converting unit 4 is transmitted to the terminal C from the transceiver unit 5 (step S4).

When the transceiver unit 5 of the terminal C receives the NI-reply, the address responding unit 2 generates NI-reply (defined by ICMP) to inform the address of the terminal C. For example, addresses "P2::c" and "P3::c" of the terminal C (requested by the NI-query) are described into an area called "Data" of the NI-reply generated by the address responding unit 2 of the terminal C, a source address (src) and a destination (dst) of the NI-reply generated are a link local address "L::c" and "L::a", respectively. The NI-reply generated by the address responding unit 2 is transmitted to the terminal A from the transceiver unit 5 (step S5).

When the transceiver 5 of the terminal A receives the NI-reply transmitted from the terminal C, the address converting unit 4 acquires addresses "P2::c" and "P3::c" included in the "Data" area of the NI-reply received. The addresses informed this time are obvious to be global addresses because those prefixes are "P2" and "P3". The address converting unit 4 determines that the global addresses of the terminal C are "P2" and "P3" because the source address of the NI-reply is the link local address of the terminal C. The address converting unit 4 stores the global addresses of the terminal C acquired at this time together with the name of the terminal C which is acquired though the steps S1-S2 and is included in the NI-reply from the terminal C, and completes the operation (step S6).

The first name resolution method is only possible when each terminal discloses the global addresses owned by the each terminal. For example, if the terminal C does not disclose its address by reason of security, etc., the first name resolution method cannot be used. Or, even if merely the terminal C does not mount a protocol to disclose its address, it cannot be used similarly.

Consequently, a second name resolution method (a second method) capable of acquiring a global address from the terminal C even in the case mentioned above will be explained.

The address converting unit 4 of the terminal A firstly generates an address by combining a prefix of a global address possible to be used in this link local with an interface ID of low 64 bits of a link local address of the terminal C. Then, the address converting unit 4 inquires again the name by setting the generated address in destination (dst) by using a protocol which has been used to resolve the name.

If the terminal C has the generated address, the terminal C ought to return a message (NI-reply) to inform the name "node C" of the terminal C, and when the address converting unit 4 receives the NI-reply including the name "node c" of the terminal C, it determines that the generated address is the global address of the terminal C and stores it into the storing unit 6.

In this case, the terminal A does not use the prefix "P3", however, the terminal A may inquire the name by using the address generated by combining the prefix "P3" with the interface ID of the terminal C.

For example, the terminal A does not use the prefix "P3", however, if the terminal A recognizes the fact that the prefix "P3" can be used (by some terminal of others) on the link local by, e.g., a router advertisement (RA), the terminal A may store the prefix "p3" to use it for generating an address.

If the address responding unit 2 of the terminal C responds only the FQDN for the NI-query, the processing operation shown in FIG. 5 is performed. In FIG. 5, the same steps in FIG. 4 are given the same reference marks and the different steps will be explained. That is, step S1 to step S3 in FIG. 5 are similar those steps in FIG. 4, the steps after the step S3 in FIG. 5 are different from the first method described in FIG. 4.

In step S3, if a source address is a link local address, the address determining unit 3 activates the address converting unit 4.

The address converting unit 4 recognizes that the terminal C has a local address "L::c" through the processes of the steps S1-S2, so that it generates address candidates of the terminal C by combining the prefixes "P1", "P2" and "P3" of global addresses possible to be currently used in a link local by the terminal A with an interface ID "c" of the terminal C (step S11). For example, "P1::c", "P2::c" and "P3::c" are generated here.

The address converting unit 4 generates an NI-query to inquire the name of the terminal C addressing to one of generated address candidates, e.g., "P1::c". A "FQDN" which information designating a query to request a name is set in an area called "Q type" of the NI-query generated at this time, a source address (src) is a link local address "L::a", and a destination (dst) is "P1::c" which is one of the generated address candidates. The NI-query generated by the address converting unit 4 is transmitted to the terminal C from the transceiver unit 5 (step S12).

In this case, the terminal C does not respond because it does not use the address "P1::c". That is, the terminal C does not return an NI-reply.

If the terminal A does not receive an NI-reply within a predetermined time interval after transmitting an NI-query (when time is over), the address converting unit 4 generates an NI-query to inquire a name to the terminal C, the destination (dst) of the NI-query generated is another of the address candidates generated in the step S11, e.g., "P2::c". An "FQDN" which is information designating a query to request a name is set in an area "Q type" of the NI-query generated at this time, a source address (src) is a link local address "L::a" of the terminal A and a destination (dst) is a generated address "P2::c". The NI-query generated by the address converting unit 4 is transmitted to the terminal C from the transceiver unit 5 (step S13).

When the transceiver unit 5 of the terminal C receives the NI-query, the address responding unit 2 responds to the received NI-query and generates an NI-reply (defined by ICMP) to inform the name "node C" of the terminal C because the destination (dst) included in the received NI-reply is a global address "P2::c" used by the terminal C. The name "node C" of the terminal C (requested by the NI-query) is described into the area "Data" of the NI-reply generated by the address responding unit 2 of the terminal C, a source address (src) of the NI-reply is a global address "P2::c" of the terminal C and a destination (dst) of the NI-reply is "L::a". The NI-reply generated by the address responding unit 2 of the terminal C is transmitted to the terminal A by the transceiver unit 5 (step S14).

When the transceiver unit 5 of the terminal A receives NI-reply addressed to a local address of the terminal A, the address converting unit 4 recognized that the NI-reply is transmitted from the terminal C because the name included in "Data" area of the NI-reply is "node C". Then, the address converting unit 4 checks the source address of the relevant NI-reply and finds the fact that it is a global address, "P2::c", which is one of the addresses candidates generated in the step S11, so that it recognizes that the terminal C has "P2::c" as a global address. That is, it determines that the global address of the terminal C is "P2::c" (step S15).

The address converting unit 4 stores into the storing unit 6, the global address of the terminal acquired this time together with the name of the terminal C which is included in the NI-reply from the terminal C and is acquired in the steps S1-S2.

Next, the address converting unit 4 of the terminal A transmits NI-query in order to check the remaining one address "P3::c" among the three address candidates generated in the step S11, in the same manner as described in the step S13.

That is, the address converting unit 4 generates an NI-query to inquire the name to the terminal addressed to "P3::c". "FQDN" which is information designating the fact that the query is one to request the name, is described into an area "Q type" of the NI-query generated at this time, a source address (src) is a link local address "L::a" of the terminal A and a destination (dst) is the generated address "P3::c". The NI-query generated from the address converting unit 4 is transmitted to the terminal C from the transceiver unit 5 (step S16).

When the transceiver 5 of the terminal C receives the NI-query, the address responding unit 2 responds to the NI-query and generates the NI-reply (defined by the ICMP) to inform the name "node C" of the terminal C in response to the relevant NI-reply because the destination of the relevant NI-query is a global address "P3::c" which is used by the terminal C. The name "node C" (requested by the NI-query) is described into an area "Data" of the NI-reply generated by the address responding unit 2 of the terminal C, a source address (src) of the NI-reply generated is a global address "P3::c" and a destination (dst) is "L::a". The NI-reply generated by the address responding unit 2 of the terminal C is transmitted to the terminal A from the transceiver unit 5 (step S17).

When the transceiver unit 5 of the terminal A receives the NI-reply including a local address of the terminal A, the address converting unit 4 recognizes that the relevant NI-reply is transmitted from the terminal C because the name included in the area "Data" of the NI-reply is "node C". Then, it checks the source address of the relevant NI-reply and recognizes that the terminal C has "P3::c" as a global address because the source address is a global address "P3::C" which is one of address candidates generated in the step S11 (step S18).

The address converting unit 4 stores the global address of the terminal C acquired this time together with the name of the terminal C which is acquired in the steps S1-S2 and is included in the NI-reply from the terminal C, in the storing unit 6.

The address converting unit 4 of the terminal A completes the operation because the trial for the all of the addresses generated in the step S11 is completed.

As a result, as an IPv6 address corresponding to the name "node C" of the terminal C, "P2::c" and "P3::c" are acquired, and the global addresses "P2::c" and "P3::c" of the terminal C are stored into the storing unit 6.

The address converting unit 4 may complete the operation at the time when one global address of the terminal C is acquired (even if there remains not trialed (checked) address). That is, at the time when the global address "P2::c" of the terminal C is acquired in the step S15 in FIG. 5, it may complete the operation.

In the step S11 in FIG. 5, though all of the address candidates are generated, not limited in this case, a step to generate an address may be provided in a pre-step of each step 12, 13 and 16, respectively, and NI-query messages addressed to the address candidate may be transmitted at every generation of the address candidate.

As explained above, according to the embodiments mentioned above, when the terminal A intends to acquire the IPv6 address corresponding to the name "node C" of the terminal C, if the terminal A acquires a link local address of the terminal C, it transmits an NI-query message of ICMPv6 addressed to the link local address of the terminal C to acquire the global address of the terminal C. Then, the terminal A acquires the global address of the terminal C included in the NI-reply message by receiving the NI-reply message of IMCPv6 having the link local address of the terminal C as a sender address.

When the terminal A intends to acquire an IPv6 address corresponding to the name "node C" of the terminal C, if the terminal A acquires a link local address of the terminal C, the terminal A generates an address candidate of the terminal C by combining the interface ID of the terminal C included in the link local address with a prefix of a global address possible to be used at the terminal A. Then, the terminal A transmits an NI-query message of ICMPv6 addressed to the generated address candidate. After that, when the terminal A receives the NI-reply message of ICMPv6 having the address candidate as a sender address, it determines that the address candidate is the global address of the terminal C.

As explained above, according to the embodiments above mentioned, the global addresses of each IPv6 node in a link local of IPv6 can be easily acquired.

## Claims

1. A communication apparatus having a first address which is a link local address of IPv6 and is used for communicating with a node apparatus and a second address which is a global address, **characterized by** comprising:
first means (1) for acquiring an IPv6 address corresponding to the node apparatus;
second means (3) for determining whether the IPv6 address acquired is a link local address or a global address, based on a prefix included in the IPv6 address acquired;
third means (4) for generating an address candidate of the node apparatus by combining an interface ID included in IPv6 address acquired with a prefix of the second address, when the IPv6 address acquired is determined to be the link local address;
fourth means (4) for generating a Node Information query (NI-query) message of Internet Control Message Protocol v6 (ICMPv6) including the address candidate as the destination address;
fifth means (5) for transmitting the NI-query message;
sixth means (5) for receiving a Node Information reply (NI-reply) message of ICMPv6; and
seventh means (4) for determining that the address candidate is the global address of the node apparatus when NI-reply message received includes the address candidate as a sender address.

2. The apparatus according to claim 1, **characterized in that** the third means is configured to generate the NI-query message used for acquiring a name of the node apparatus; and
the seventh means is configured to determine that the address candidate is the global address of the node apparatus when the NI-reply message received includes the name of the node apparatus and the address candidate as the sender address.

3. A communication apparatus having at least a first address which is a link local address of IPv6 and is used for communicating with a node apparatus, **characterized by** comprising:
means (1) for acquiring an IPv6 address of the node apparatus;
means (3) for determining whether the IPv6 address acquired is a link local address or a global address, based on a prefix included in the IPv6 address acquired;
means (4) for generating a Node Information query (NI-query) message of Internet Control Message Protocol v6 (ICMPv6) when the IPv6 address acquired is determined to be the link local address, the NI-query message being used for acquiring the global address of the node apparatus and including the link local address of the node apparatus as a destination address;
means (5) for transmitting the NI-query message;
means (4, 5) for receiving a Node Information reply (NI-reply) message of ICMPv6 including the link local address of the node apparatus as the sender address and the global address of the node apparatus, to obtain the global address of the second node apparatus.

4. A name resolution method for a first node apparatus having a first address which is a link local address of IPv6 and a second address which is a global address of IPv6 to acquire an IPv6 address of a second node apparatus with which the first node apparatus communicates using the first address, the method **characterized by** comprising:
a first step of acquiring the IPv6 address corresponding to the second node apparatus;
a second step of determining whether the IPv6 address acquired is a link local address or a global address, based on a prefix included in the IPv6 address acquired;
a third step of generating an address candidate of the second node apparatus by combining an interface ID included in IPv6 address acquired with a prefix of the second address used by the first node apparatus, when the IPv6 address acquired is determined to be the link local address;
a fourth step of generating a Node Information query (NI-query) message of Internet Control Message Protocol v6 (ICMPv6) including the address candidate as a destination address;
a fifth step of transmitting the NI-query message;
a sixth step of receiving a Node Information reply (NI-reply) message of ICMPv6; and
a seventh step of determining that the address candidate is the global address of the second node apparatus when NI-reply message received includes the address candidate as a sender address.

5. The method according to claim 4, **characterized in that** the fourth step includes generating the NI-query message used for acquiring a name of the second node apparatus; and
the seventh step includes determining that the address candidate is the global address of the second node apparatus when the NI-reply message received includes the name of the second node apparatus and the address candidate as the sender address.

6. A name resolution method for a first node apparatus having a first address which is a link local address of IPv6 to acquire an IPv6 address corresponding to a second node apparatus with which the first node apparatus communicates using the first address, the method **characterized by** comprising:
a step of acquiring an IPv6 address of the second node apparatus;
a step of determining whether the IPv6 address acquired is a link local address or a global address, based on a prefix included in the IPv6 address acquired;
a step of generating a Node Information query (NI-query) message of Internet Control Message Protocol v6 (ICMPv6) when the IPv6 address acquired is determined to be the link local address, the NI-query message being used for acquiring the global address of the second node apparatus and including the link local address of the second node apparatus as a destination address;
a step of transmitting the NI-query message;
a step of receiving a Node Information reply (NI-reply) message of ICMPv6 including the link local address of the second node apparatus as the sender address and the global address of the second node apparatus, to obtain the global address of the second node apparatus.

7. A name resolution program for a computer having a first address which is a link local address of IPv6 and a second address which is a global address to acquire an IPv6 address of a node apparatus with which the computer communicates using the first address, the program recorded on a computer readable medium **characterized by** comprising:
first instruction means for instructing the computer to acquire the IPv6 address corresponding to the node apparatus;
second instruction means for instructing the computer to determine whether the IPv6 address acquired is a link local address or a global address, based on a prefix included in the IPv6 address acquired;
third instruction means for instructing the computer to generate an address candidate of the node apparatus by combining an interface ID included in IPv6 address acquired with a prefix of the second address, when the IPv6 address acquired is determined to be the link local address;
fourth instruction means for instructing the computer to generate a Node Information query (NI-query) message of Internet Control Message Protocol v6 (ICMPv6) including the address candidate as the destination address;
fifth instruction means for instructing the computer to transmit the NI-query message;
sixth instruction means for instructing the computer to receive a Node Information reply (NI-reply) message of ICMPv6; and
seventh instruction means for instructing the computer to determine that the address candidate is the global address of the node apparatus when NI-reply message received includes the address candidate as a sender address.

8. The name resolution program recorded on the computer readable medium according to claim 7, **characterized in that** the fourth instruction means includes instructing the computer to generate the NI-query message used for acquiring a name of the node apparatus; and
seventh instruction means includes instructing the computer to determine that the address candidate is the global address of the node apparatus when the NI-reply message received includes the name of the node apparatus and the address candidate as the sender address.

## Patentansprüche

1. Kommunikationsvorrichtung, die eine erste Adresse, die eine lokale Verknüpfungsadresse von IPv6 ist und zum Kommunizieren mit einer Knotenvorrichtung benutzt wird, und eine zweite Adresse aufweist, die eine globale Adresse ist, **dadurch gekennzeichnet, dass** sie Folgendes umfasst:
erste Mittel (1) zum Erwerben einer IPv6-Adresse, die der Knotenvorrichtung entspricht;
zweite Mittel (3) zum Bestimmen, ob die erworbene IPv6-Adresse eine lokale Verknüpfungsadresse oder eine globale Adresse ist, basierend auf einem Präfix, das in der erworbenen IPv6-Adresse enthalten ist;
dritte Mittel (4) zum Erzeugen eines Adresskandidaten der Knotenvorrichtung durch Kombinieren einer Schnittstellen-ID, die in der IPv6-Adresse enthalten ist, die mit einem Präfix der zweiten Adresse erworben wird, wenn die erworbene IPv6-Adresse als lokale Verknüpfungsadresse bestimmt wird;
vierte Mittel (4) zum Erzeugen einer Knoteninformationsabfragenachricht (KI-Abfrage) eines Internet-Steuerungsnachrichtenprotokolls v6 (ICMPv6), das den Adresskandidaten als Zieladresse aufweist;
fünfte Mittel (5) zum Übertragen der KI-Abfragenachricht;
sechste Mittel (6) zum Empfangen einer Knoteninformationsantwortnachricht (KI-Antwort) von ICMPv6; und
siebte Mittel (4) zum Bestimmen, dass der Adresskandidat die globale Adresse der Knotenvorrichtung ist, wenn die empfangene KI-Antwortnachricht den Adresskandidaten als eine Senderadresse aufweist.

2. Vorrichtung nach Anspruch 1, **dadurch gekennzeichnet, dass** das dritte Mittel konfiguriert ist, um die KI-Abfragenachricht zu erzeugen, die zum Erwerben eines Namens der Knotenvorrichtung benutzt wird; und
das siebte Mittel konfiguriert ist, um zu bestimmen, dass der Adresskandidat die globale Adresse der Knotenvorrichtung ist, wenn die empfangene KI-Antwortnachricht den Namen der Knotenvorrichtung und den Adresskandidaten als die Senderadresse aufweist.

3. Kommunikationsvorrichtung, die mindestens eine erste Adresse aufweist, die eine lokale Verknüpfungsadresse von IPv6 ist und zum Kommunizieren mit einer Knotenvorrichtung benutzt wird, **dadurch gekennzeichnet, dass** sie Folgendes umfasst:
Mittel (1) zum Erwerben einer Ipv6-Adresse der Knotenvorrichtung;
Mittel (3) zum Bestimmen, ob die erworbene IPv6-Adresse eine lokale Verknüpfungsadresse oder eine globale Adresse ist, basierend auf einem Präfix, das in der erworbenen IPv6-Adresse enthalten ist;
Mittel (4) zum Erzeugen einer Knoteninformationsabfragenachricht (KI-Abfrage) des Internet-Steuerungsnachrichtenprotokolls v6 (ICMPv6), wenn die erworbene IPv6-Adresse als lokale Verknüpfungsadresse bestimmt wird, wobei die KI-Abfragenachricht benutzt wird, um die globale Adresse der Knotenvorrichtung zu erwerben und die lokale Verknüpfungsadresse der Knotenvorrichtung als eine Zieladresse zu enthalten;
Mittel (5) zum Übertragen der KI-Abfragenachricht;
Mittel (4, 5) zum Empfangen einer Knoteninformationsantwortnachricht (KI-Antwort) von ICMPv6, welche die lokale Verknüpfungsadresse der Knotenvorrichtung als die Senderadresse und die globale Adresse der Knotenvorrichtung aufweist, um die globale Adresse der zweiten Knotenvorrichtung zu erhalten.

4. Verfahren zur Namensauflösung für eine erste Knotenvorrichtung, die eine erste Adresse, die eine lokale Verknüpfungsadresse des IPv6 ist, und eine zweite Adresse aufweist, die eine globale Adresse des IPv6 ist, um eine IPv6-Adresse einer zweiten Knotenvorrichtung zu erwerben, mit der die erste Knotenvorrichtung unter Verwendung der ersten Adresse kommuniziert, wobei das Verfahren **dadurch gekennzeichnet ist, dass** es Folgendes umfasst:
einen ersten Schritt des Erwerbens der IPv6-Adresse, die der zweiten Knotenvorrichtung entspricht;
einen zweiten Schritt des Bestimmens, ob die erworbene IPv6-Adresse eine lokale Verknüpfungsadresse oder eine globale Adresse ist, basierend auf einem Präfix, das in der erworbenen IPv6-Adresse enthalten ist;
einen dritten Schritt des Erzeugens eines Adresskandidaten der zweiten Knotenvorrichtung durch Kombinieren einer Schnittstellen-ID, die in der IPv6-Adresse enthalten ist, die mit einem Präfix der zweiten Adresse erworben wird, die von der ersten Knotenvorrichtung benutzt wird, wenn die erworbene IPv6-Adresse als die lokale Verknüpfungsadresse bestimmt wird;
einen vierten Schritt des Erzeugens einer Knoteninformationsabfragenachricht (KI-Abfrage) des Internet-Steuerungsnachrichtenprotokolls v6 (ICMPv6), das den Adresskandidaten als eine Zieladresse aufweist;
einen fünften Schritt des Übertragens der KI-Abfragenachricht;
einen sechsten Schritt des Empfangens einer Knoteninformationsantwortnachricht (KI-Antwort) von ICMPv6; und
einen siebten Schritt des Bestimmens, dass der Adresskandidat die globale Adresse der zweiten Knotenvorrichtung ist, wenn die empfangene KI-Antwortnachricht den Adresskandidaten als Senderadresse aufweist.

5. Verfahren nach Anspruch 4, **dadurch gekennzeichnet, dass** der vierte Schritt das Erzeugen der KI-Abfragenachricht umfasst, die zum Erwerben eines Namens der zweiten Knotenvorrichtung benutzt wird; und
der siebte Schritt das Bestimmen umfasst, dass der Adresskandidat die globale Adresse der zweiten Knotenvorrichtung ist, wenn die empfangene KI-Antwortnachricht den Namen der zweiten Knotenvorrichtung und den Adresskandidaten als Senderadresse enthält.

6. Verfahren zur Namensauflösung für eine erste Knotenvorrichtung, die einer erste Adresse aufweist, die eine lokale Verknüpfungsadresse von IPv6 ist, um eine IPv6-Adresse zu erwerben, die einer zweiten Knotenvorrichtung entspricht, mit welcher die erste Knotenvorrichtung unter Verwendung der ersten Adresse kommuniziert, **dadurch gekennzeichnet, dass** es Folgendes umfasst:
einen Schritt des Erzeugens einer Knoteninformationsabfragenachricht (KI-Abfrage) des Internet-Steuerungsnachrichtenprotokolls v6 (ICMPv6), wenn die erworbene IPv6-Adresse als lokale Verknüpfungsadresse bestimmt wird, wobei die KI-Abfragenachricht benutzt wird, um die globale Adresse der Knotenvorrichtung zu erwerben und die lokale Verknüpfungsadresse der Knotenvorrichtung als eine Zieladresse zu enthalten;
einen Schritt des Übertragens der KI-Abfragenachricht;
einen Schritt des Empfangens einer Knoteninformationsantwortnachricht (KI-Antwort) von ICMPv6, welche die lokale Verknüpfungsadresse der Knotenvorrichtung als die Senderadresse und die globale Adresse der Knotenvorrichtung aufweist, um die globale Adresse der zweiten Knotenvorrichtung zu erhalten.

7. Programm zur Namensauflösung für einen Computer, der eine erste Adresse aufweist, die eine lokale Verknüpfungsadresse von IPv6 ist, und eine zweite Adresse, die eine globale Adresse ist, um eine IPv6-Adresse einer Knotenvorrichtung zu erwerben, mit welcher der Computer unter Verwendung der ersten Adresse kommuniziert, wobei das Programm auf einem computerlesbaren Medium aufgezeichnet wird, das **dadurch gekennzeichnet ist, dass** es Folgendes umfasst:
erste Befehlsmittel, um dem Computer zu befehlen, die IPv6-Adresse zu erwerben, die der Knotenvorrichtung entspricht;
zweite Befehlsmittel, um dem Computer zu befehlen, zu bestimmen, ob die erworbene IPv6-Adresse eine lokale Verknüpfungsadresse oder eine globale Adresse ist, basierend auf einem Präfix, das in der erworbenen IPv6-Adresse enthalten ist;
dritte Befehlsmittel, um dem Computer zu befehlen, durch Kombinieren einer Schnittstellen-ID, die in der IPv6-Adresse enthalten ist, die mit einem Präfix der zweiten Adresse erworben wird, einen Adresskandidaten der Knotenvorrichtung zu erzeugen, wenn die erworbene IPv6-Adresse als die lokale Verknüpfungsadresse bestimmt wird;
vierte Befehlsmittel, um dem Computer zu befehlen, eine Knoteninformationsabfragenachricht (KI-Abfrage) des Internet-Steuerungsnachrichtenprotokolls (ICMPv6) zu erzeugen, das den Adresskandidaten als die Zieladresse aufweist;
fünfte Befehlsmittel, um dem Computer zu befehlen, die KI-Abfragenachricht zu übertragen;
sechste Befehlsmittel, um dem Computer zu befehlen, eine Knoteninformationsantwortnachricht (KI-Antwort) von ICMPv6 zu empfangen; und
siebte Befehlsmittel, um dem Computer zu befehlen, zu bestimmen, dass der Adresskandidat die globale Adresse der Knotenvorrichtung ist, wenn die KI-Antwortnachricht den Adresskandidaten als eine Senderadresse enthält.

8. Programm zur Namensauflösung, das auf dem computerlesbaren Medium nach Anspruch 7 aufgezeichnet wird, **dadurch gekennzeichnet, dass** die vierten Befehlsmittel dem Computer befehlen, die KI-Abfragenachricht zu erzeugen, die zum Erwerben eines Namens der Knotenvorrichtung benutzt wird; und
die siebten Befehlsmittel dem Computer befehlen, zu bestimmen, dass der Adresskandidat die globale Adresse der Knotenvorrichtung ist, wenn die empfangene KI-Antwortnachricht den Namen der Knotenvorrichtung und den Adresskandidaten als die Senderadresse aufweist.

## Revendications

1. Appareil de communication qui comporte une première adresse qui est une adresse locale de lien de IPv6 et qui est utilisée pour communiquer avec un appareil de noeud et une seconde adresse qui est une adresse globale, **caractérisé en ce qu'**il comprend :
un premier moyen (1) pour acquérir une adresse IPv6 qui correspond à l'appareil de noeud ;
un second moyen (3) pour déterminer si oui ou non l'adresse IPv6 qui est acquise est une adresse locale de lien ou une adresse globale, sur la base d'un préfixe qui est inclus dans l'adresse IPv6 acquise ;
un troisième moyen (4) pour générer un candidat d'adresse de l'appareil de noeud en combinant une ID d'interface qui est incluse dans une adresse IPv6 acquise avec un préfixe de la seconde adresse, lorsque l'adresse lPv6 acquise est déterminée comme étant l'adresse locale de lien ;
un quatrième moyen (4) pour générer un message d'interrogation d'information de Noeud (Interrogation NI) de Protocole de Message de Commande de l'Internet v6 (ICMPv6) incluant le candidat d'adresse en tant qu'adresse de destination ;
un cinquième moyen (5) pour transmettre le message d'interrogation NI ;
un sixième moyen (5) pour recevoir un message de réponse d'information de Noeud (réponse NI) de ICMPv6 ; et
un septième moyen (4) pour déterminer que le candidat d'adresse est l'adresse globale de l'appareil de noeud lorsqu'un message de réponse NI qui est reçu inclut le candidat d'adresse en tant qu'adresse d'envoyeur.

2. Appareil selon la revendication 1, **caractérisé en ce que** :
le troisième moyen est configuré pour générer le message d'interrogation NI qui est utilisé pour acquérir un nom de l'appareil de noeud; et
le septième moyen est configuré pour déterminer que le candidat d'adresse est l'adresse globale de l'appareil de noeud lorsque le message de réponse NI qui est reçu inclut le nom de l'appareil de noeud et le candidat d'adresse en tant qu'adresse d'envoyeur.

3. Appareil de communication comportant au moins une première adresse qui est une adresse locale de lien de IPv6 et qui est utilisée pour communiquer avec un appareil de noeud, **caractérisé en ce qu'**il comprend :
un moyen (1) pour acquérir une adresse IPv8 de l'appareil de noeud ;
un moyen (3) pour déterminer si l'adresse IPv6 qui est acquise est une adresse locale de lien ou une adresse globale, sur la base d'un préfixe qui est inclus dans l'adresse IPv6 acquise ;
un moyen (4) pour générer un message d'interrogation d'Information de Noeud (interrogation NI) de Protocole de Message de Commande de l'Internet v6 (ICMPv6) lorsque l'adresse IPv6 acquise est déterminée comme étant l'adresse locale de lien, le message d'interrogation NI étant utilisé pour acquérir l'adresse globale de l'apparell de noeud et incluant l'adresse locale de lien de l'appareil de noeud en tant qu'adresse de destination ;
un moyen (5) pour émettre le message d'interrogation NI ;
un moyen (4, 5) pour recevoir un message de réponse d'information de Noeud (réponse NI) de ICMPv6 incluant l'adresse locale de lien de l'appareil de noeud en tant qu'adresse d'envoyeur et l'adresse globale de l'appareil de noeud, afin d'obtenir l'adresse globale du second appareil de noeud.

4. Procédé de résolution de nom pour un premier appareil de noeud comportant une première adresse qui est une adresse locale de lien de IPv6 et une seconde adresse qui est une adresse globale de IPv6 pour acquérir une adresse IPv6 d'un second appareil de noeud avec lequel le premier appareil de noeud communique en utilisant la première adresse, le procédé étant **caractérisé en ce qu'**il comprend :-
une première étape d'acquisition de l'adresse IPv6 qui correspond au second appareil de noeud ;
une seconde étape de détermination de si l'adresse IPv6 acquise est une adresse locale de lien ou une adresse globale, sur la base d'un préfixe qui est inclus dans l'adresse IPv6 acquise ;
une troisième étape de génération d'un candidat d'adresse du second appareil de noeud en combinant une ID d'interface qui est incluse dans une adresse IPv6 acquise avec un préfixe de la seconde adresse qui est utilisée par le premier appareil de noeud, lorsque l'adresse IPv6 qui est acquise est déterminée comme étant l'adresse locale de lien ;
une quatrième étape de génération d'un message d'interrogation d'information de Noeud (interrogation NI) de Protocole de Message de Commande de l'Internet v6 (ICMPv6) incluant le candidat d'adresse en tant qu'adresse de destination ;
une cinquième étape d'émission du message d'interrogation NI ;
une sixième étape de réception d'un message de réponse d'information de Noeud (réponse NI) de ICMPv6 ; et
une septième étape de détermination du fait que le candidat d'adresse est l'adresse globale du second appareil de noeud lorsqu'un message de réponse NI qui est reçu inclut le candidat d'adresse en tant qu'adresse d'envoyeur.

5. Procédé selon la revendication 4, **caractérisé en ce que** :
la quatrième étape inclut la génération du message d'interrogation NI qui est utilisé pour acquérir un nom du second appareil de noeud ; et
la septième étape inclut la détermination du fait que le candidat d'adresse est l'adresse globale du second appareil de noeud lorsque le message de réponse NI qui est reçu inclut le nom du second appareil de noeud et le candidat d'adresse en tant qu'adresse d'envoyeur.

6. Procédé de résolution de nom pour un premier appareil de noeud comportant une première adresse qui est une adresse locale de lien de IPv6 pour acquérir une adresse IPv6 qui correspond à un second appareil de noeud avec lequel le premier appareil de noeud communique en utilisant la première adresse, le procédé étant **caractérisé en ce qu'**il comprend :
une étape d'acquisition d'une adresse IPv6 du second appareil de noeud ;
une étape de détermination de si l'adresse lPv6 acquise est une adresse locale de lien ou une adresse globale, sur la base d'un préfixe qui est inclus dans l'adresse IPv6 acquise ;
une étape de génération d'un message d'interrogation d'information de Noeud (interrogation NI) de Protocole de Message de Commande de l'Internet v6 (ICMPv6) lorsque l'adresse IPv6 qui est acquise est déterminée comme étant l'adresse locale de lien, le message d'interrogation NI étant utilisé pour acquérir l'adresse globale du second appareil de noeud et incluant l'adresse locale de lien du second appareil de noeud en tant qu'adresse de destination ;
une étape d'émission du message d'interrogation NI ; et
une étape de réception d'un message de réponse d'Information de Noeud (réponse NI) de ICMPv6 incluant l'adresse locale de lien du second appareil de noeud en tant qu'adresse d'envoyeur et l'adresse globale du second appareil de noeud, afin d'obtenir l'adresse globale du second appareil de noeud.

7. Programme de résolution de nom pour un ordinateur comprenant une première adresse qui est une adresse locale de lien de IPv6 et une seconde adresse qui est une adresse globale pour acquérir une adresse IPv6 d'un appareil de noeud avec lequel l'ordinateur communique en utilisant la première adresse, le programme enregistré sur un support lisible par ordinateur étant **caractérisé en ce qu'**il comprend :
un premier moyen d'instruction pour demander en instruction à l'ordinateur d'acquérir l'adresse IPv6 qui correspond à l'appareil de noeud ;
un second moyen d'instruction pour demander en instruction à l'ordinateur de déterminer si oui ou non l'adresse IPv6 qui est acquise est une adresse locale de lien ou une adresse globale, sur la base d'un préfixe qui est inclus dans l'adresse IPv6 acquise ;
un troisième moyen d'instruction pour demander en instruction à l'ordinateur de générer un candidat d'adresse de l'appareil de noeud en combinant une ID d'interface qui est incluse dans une adresse IPv6 qui est acquise avec un préfixe de la seconde adresse, lorsque l'adresse IPv6 acquise est déterminée comme étant l'adresse locale de lien ;
un quatrième moyen d'instruction pour demander en instruction à l'ordinateur de générer un message d'interrogation d'information de Noeud (Interrogation NI) de Protocole de Message de Commande de l'Internet v6 (ICMPv6) incluant le candidat d'adresse en tant qu'adresse de destination ;
un cinquième moyen d'instruction pour demander en instruction à l'ordlnateur de transmettre le message d'interrogation NI ;
un sixième moyen d'instruction pour demander en instruction à l'ordinateur de recevoir un message de réponse d'information de Noeud (réponse NI) de iCMPv6 ; et
un septième moyen d'instruction pour demander en instruction à l'ordinateur de déterminer que le candidat d'adresse est l'adresse globale de l'appareil de noeud lorsqu'un message de réponse NI qui est reçu inclut le candidat d'adresse en tant qu'adresse d'envoyeur.

8. Programme de résolution de nom enregistré sur le support lisible par ordinateur selon la revendication 7, **caractérisé en ce que** :
le quatrième moyen d'instruction inclut le fait de demander en instruction à l'ordinateur de générer le message d'interrogation NI qui est utilisé pour acquérir un nom de l'appareil de noeud ; et
le septième moyen d'instruction inclut le fait de demander en instruction à l'ordinateur de déterminer que le candidat d'adresse est l'adresse globale de l'appareil de noeud lorsque le message de réponse NI qui est reçu inclut le nom de l'appareil de noeud et le candidat d'adresse en tant qu'adresse d'envoyeur.
